Europäisches Patentamt

European Patent Office

Office européen des brevets

(19)

(11) EP 0 829 145 B1

(12) FASCICULE DE BREVET EUROPEEN

(45) Date de publication et mention
de la délivrance du brevet:
**27.01.1999 Bulletin 1999/04**

(21) Numéro de dépôt: **96920890.9**

(22) Date de dépôt: **03.06.1996**

(51) Int Cl.⁶: **H04B 1/66**, H04H 1/00

(86) Numéro de dépôt international:
**PCT/FR96/00833**

(87) Numéro de publication internationale:
**WO 96/38927 (05.12.1996 Gazette 1996/53)**

(54) **SYSTEME DE DIFFUSION DE DONNEES UTILISANT LES PROPRIETES DE L'OREILLE HUMAINE**

DATENRUNDFUNKSYSTEM UNTER VERWENDUNG DER EIGENSCHAFTEN DES MENSCHLICHEN OHRES

DATA BROADCASTING SYSTEM USING THE HUMAN EAR PROPERTIES

(84) Etats contractants désignés:
**BE CH DE ES GB IT LI NL**

(30) Priorité: **02.06.1995 FR 9506727**

(43) Date de publication de la demande:
**18.03.1998 Bulletin 1998/12**

(73) Titulaire: **TELEDIFFUSION DE FRANCE SA
75932 Paris Cédex 15 (FR)**

(72) Inventeurs:
• **BOURCET, Patrice
F-57070 Mey (FR)**
• **MASSE, Denis
F-57780 Rosselange (FR)**
• **JAHAN, Bruno
F-57158 Montigny-les-Metz (FR)**

(74) Mandataire: **Ballot, Paul Denis Jacques
Cabinet Ballot-Schmit,
18, Place du Forum
57000 Metz (FR)**

(56) Documents cités:
EP-A- 0 245 037          EP-A- 0 372 601
DE-A- 3 806 411

## Description

L'invention concerne le domaine de la diffusion de signaux comprenant une composante audiofréquentielle. Plus particulièrement, elle concerne un système de diffusion de données.

Le domaine de la diffusion (diffusion de programmes de télévisions ou de radio, téléphonie sans fil etc.) est bien connu.

Une tendance actuelle est d'émettre, en plus des programmes (ou de la voix dans le domaine de la téléphonie), des données utiles pour les sociétés de diffusion, pour des organismes de contrôle, ou pour des auditeurs ou téléspectateurs. Ces données pourront concerner par exemple :

- l'aide à la sélection d'un programme en diffusion sonore ou télévisuelle (exemple : aide à l'accord automatique, recherche par nom d'une station de radio, recherche par genre de programme, recherche par menu, etc.)
- des informations sur le programme en cours de diffusion ou de reproduction après enregistrement (par exemple le nom de la société ayant créé un programme, le titre d'un film diffusé par une chaîne de télévision, la référence discographique d'une chanson diffusée par une station de radio, etc.),
- des données de service dans le cas du radiotéléphone analogique.

On assiste également au développement de systèmes de diffusion dits interactifs qui permettent aux téléspectateurs ou aux auditeurs de dialoguer de manière plus ou moins performante avec la source de programme. Ces moyens sont utilisés soit pour agir sur le contenu du programme diffusé, soit pour jouer, pour parier, pour communiquer au sujet de ce même programme. Ainsi, récemment est apparue une forme d'interactivité via de petits dispositifs simulant un pseudodialogue avec un programme conçu à cet effet. Un boîtier format télécommande donne l'illusion d'une interactivité dans la mesure où il permet, par exemple, de répondre à un jeu télévisé de questions/réponses au fur et à mesure où les questions sont posées. Ou bien encore, un dispositif électronique dissimulé dans un jouet en peluche permet à celui-ci de réagir face à un programme diffusé ou reproduit à l'aide d'un magnétoscope. En fait, l'interactivité n'est pas réelle car la suite des bonnes réponses ou des réactions du jouet obéit à des séquences préétablies, communes à la mémoire du dispositif interactif et au programme diffusé ou reproduit. La séquence audiovisuelle ayant été préenregistrée conformément à un code choisi, son déroulement est prévisible et en conséquence, les seules informations à transmettre au dispositif interactif sont un signal de départ ainsi que le minutage exacte des questions/réponses ou des diverses réactions possibles dans le cas du jouet.

Il existe aussi une demande concernant l'identification automatique d'une séquence sonore, accompagnée d'une image ou non. Pour les diffuseurs il s'agit de vérifier qu'un programme donné est bien diffusé sur la fréquence qui lui a été allouée, ce qui peut devenir assez complexe lorsqu'un programme national est affecté de décrochages régionaux ou locaux. Cela permet également, pour des organes de vérification, de comptabiliser la diffusion d'oeuvres protégées par des droits d'auteur ou de vérifier la conformité de la diffusion de spots publicitaires. Enfin, pour des organismes de sondage ou d'évaluation d'audience, il s'agit d'identifier rapidement ce qui est réellement écouté par un auditeur ou un téléspectateur. Actuellement pour évaluer l'audience des récepteurs radio, la seule solution disponible est le sondage par interview des consommateurs.

Toutes ces applications sont faciles à introduire lors de la conception de nouveaux systèmes de diffusion, notamment numérique, de radio ou de télévision. Par contre, les systèmes et les parcs d'équipements existants se prêtent généralement assez mal à cette évolution et l'expérience prouve, que d'un point de vue technico-commercial, la compatibilité et le coût relatifs aux procédés et dispositifs à mettre en oeuvre sont des facteurs déterminants dans l'introduction d'un nouveau service.

Pour l'émission de données concernant un programme diffusé, deux techniques sont actuellement employées.

Une première technique consiste à transmettre ces données en dehors de la bande passante occupée par le signal du programme (son et éventuellement image) transmis. Une solution consiste par exemple, en diffusion sonore par modulation de fréquence multiplex, à utiliser la partie supérieure du multiplex, entre 54 et 76 kiloHertz. Un autre exemple consiste à utiliser les lignes disponibles pendant le retour de trame en diffusion télévisuelle. Ces techniques présentent des inconvénients. La saturation des ressources fréquentielles disponibles en diffusion limite le nombre d'utilisateurs de ces ressources. D'autre part, il est nécessaire de disposer de récepteurs adaptés aux bandes passantes utilisées pour transmettre les informations émises.

Une autre technique consiste à transmettre les données dans la bande passante du signal du programme transmis, ce qui ne nécessite pas l'utilisation de bandes de fréquence dédiées. Il n'est donc pas nécessaire d'utiliser des émetteurs et des récepteurs fréquentiellement adaptés à une transmission dans de telles bandes fréquentielles dédiées. Typiquement, on filtre le signal d'origine (correspondant au programme à transmettre) afin d'éliminer les composantes fréquentielles dans une bande de fréquence donnée et on insère dans cette bande les données. On déforme donc le signal d'origine, ce qui peut s'avérer gênant pour un téléspectateur ou un auditeur que les données n'intéressent pas. En conséquence, le temps consacré à l'envoi des informations est limité par les diffuseurs au strict minimum, ce qui réduit d'autant le débit des données. Ainsi, dans le cadre de dispositifs interactifs dans le domaine télévisuel, le chargement des données s'effectue de manière globale, en une seul fois, au début d'une application donnée. Il n'est alors pas possible d'adapter les données suite à une modification du programme, qui doit se dérouler suivant le minutage prévu et sans interruption inopinée. On peut bien entendu utiliser au niveau des récepteurs des moyens de filtrage pour ne pas répercuter systématiquement d'un point de vue sonore ou visuel les données reçues, celles ci étant alors transparentes pour l'auditeur ou le téléspectateur. Il n'en reste pas moins qu'on ne peut assurer que le signal vu ou entendu par le téléspectateur ou l'auditeur sera identique au signal original qu'il aurait perçu, avant insertion des données.

Au vu de ce qui précède, un but de l'invention est de proposer un système permettant de transmettre des données dans la bande passante d'un signal comprenant une composante audiofréquentielle, sans modifier, par rapport au signal audiofréquentiel original, le signal perçu par l'auditeur. L'invention propose d'insérer ces données dans des bandes de fréquence dites masquées du signal audiofréquentiel original, si ces bandes existent, c'est à dire à un niveau inférieur au seuil d'audition instantané dû au phénomène de masquage auditif induit par le signal audiofréquentiel original lui-même. Les données transmises sont alors inaudibles, tout en n'altérant pas le signal audiofréquentiel d'origine d'un point de vue subjectif, et tout en ne nécessitant pas l'utilisation de composantes fréquentielles situées en dehors de la bande spectrale occupée par le signal d'origine. L'invention propose donc une transmission des données adaptée à l'utilisation de récepteurs et d'émetteurs existants, et subjectivement non perturbantes pour l'auditeur.

Ainsi, l'invention concerne un système de diffusion de données, ces informations étant transmises dans la bande passante d'un signal audiofréquentiel diffusé, caractérisé en ce qu'il comprend àes moyens de détermination dans au moins une bande de fréquence de l'amplitude du signal audiofréquentiel et de comparaison de cette amplitude avec un niveau de masque auditif associé à cette bande de fréquence, des moyens d'élimination des composantes fréquentielles du signal audiofréquentiel dans la dite bande de fréquence si l'amplitude du signal est inférieur au niveau de masque auditif de la dite bande, et des moyens d'insertion des dites informations dans cette bande de fréquence à un niveau inférieur ou égal au niveau de masque auditif de la dite bande de fréquence.

D'autres particularités et avantages apparaîtront à la lecture de la description qui suit, à lire conjointement aux dessins annexés dans lesquels :

- les figures 1 et 2 représentent des diagrammes illustrant le phénomène de masquage auditif,
- la figure 3 représente un dispositif d'extraction de données,
- la figure 4 représente un dispositif d'insertion de données.

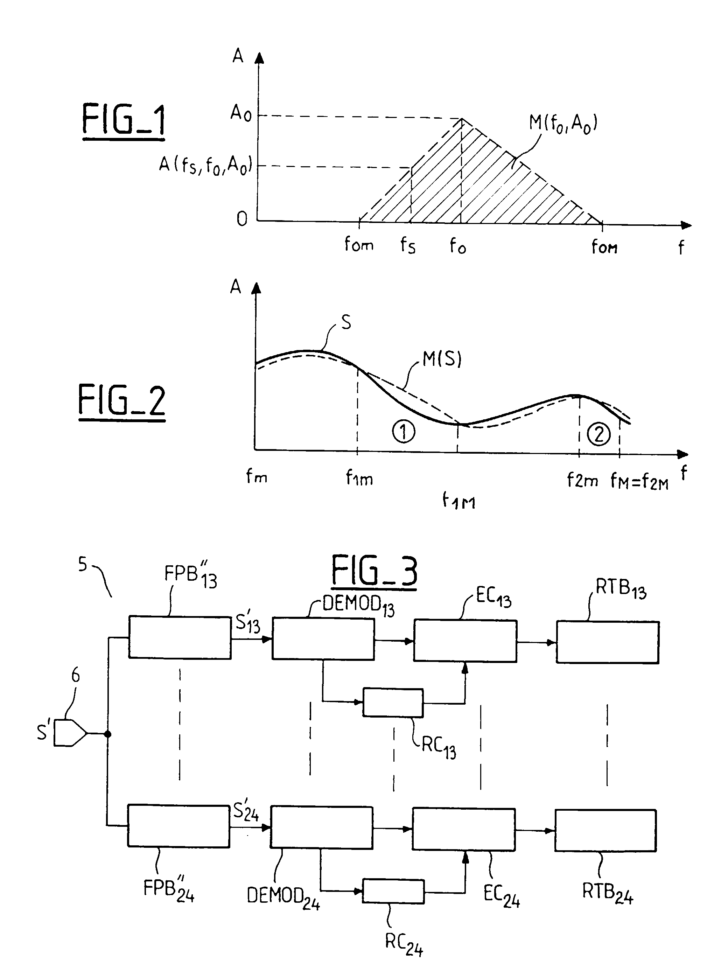

Les figures 1 et 2 sont des diagrammes d'amplitude en fonction de la fréquence illustrant le phénomène de masquage auditif, qui est un phénomène d'origine physiologique.

Si on considère l'audition par un être humain d'un signal audiofréquentiel de fréquence et d'amplitude données, le phénomène de masquage auditif se traduit par la non perception, par ce même être humain, de signaux audiofréquentiels émis simultanément et ayant des amplitudes inférieures à des niveaux de seuil donnés.

Ainsi, en référence à la figure 1, si on considère un signal monofréquentiel de fréquence $f_0$, située dans le spectre audiofréquentiel (typiquement entre 20 et 15 500 Hertz) et d'amplitude $A_0$, on peut définir un domaine $M(f_0, A_0)$ en amplitude et en fréquence tel que tout signal monofréquentiel émis simultanément, de fréquence $f_s$ comprise dans un domaine fréquentiel borné [$f_{0m}$, $f_{0M}$], avec $f_{0m} < f_0$ et $f_{0M} > f_0$, et d'amplitude $A < A(f_s, f_0, A_0) < A_0$ est inaudible.

Les valeurs $f_{0m}$, $f_{0M}$ sont variables pour une fréquence $f_0$ donnée. Pratiquement, plus l'amplitude $A_0$ est importante, plus le domaine [$f_{0m}$, $f_{0M}$] est large. On notera également que le domaine n'est pas symétrique par rapport à $f_0$, et s'étend plus largement dans le domaine des fréquences supérieures à $f_0$.

La valeur de l'amplitude $A(f_s, f_0, A_0)$ est variable en fonction de $f_s$, $f_0$, et de $A_0$. Pratiquement, plus $f_s$ est proche de $f_0$, plus le seuil $A(f_s, f_0, A_0)$ d'inaudibilité est important.

Le phénomène de masquage auditif est connu depuis plusieurs années. Pour plus de précisions, on se reportera à l'ouvrage "Psychoacoustique, de E. Zwicker et R. Feldtkeller, Ed. Masson, 1981". Les résultats expérimentaux décrits dans cet ouvrage ont donnés lieu à une normalisation (norme ISO/IEC 11172-3).

On pourra définir une courbe de niveau de masque M(S) (illustrée par des pointillés sur la figure 2) pour tout signal S couvrant le spectre audiofréquentiel [$f_m$, $f_M$], avec $f_m$ = 20 Hertz et $f_M$ = 15 500 Hertz. Dans l'exemple illustré sur la figure 2, on notera qu'il existe deux domaines [$f_{1m}$, $f_{1M}$] et [$f_{2m}$, $f_{2M}$] dans lesquels la courbe de niveau de masque M (S) a une amplitude supérieure à celle du signal S. Concrètement, cela signifie que les composantes spectrales comprises dans ces domaines sont inaudibles pour l'être humain. En conséquence, le rendu auditif subjectif d'un signal S' identique au signal S en dehors de ces domaines, et sans composantes fréquentielles dans ces domaines, sera identique au rendu du signal S illustré sur la figure 2.

La modélisation du phénomène de masquaqe auditif a donné lieu à la division du spectre audiofréquentiel en vingt-quatre domaines disjoints, appelés bandes critiques, tels que la réunion des vingt-quatre bandes critiques couvre le domaine fréquentiel entre 20 Hertz et 15 500 kilohertz. Chaque bande critique $B_i$ (i indice entier de 1 à 24) est définie par sa fréquence centrale fc et sa largeur.

Le tableau ci-dessous donne pour chaque bande critique la valeur de la fréquence centrale et sa largeur.

| Bande critique | Fréquence centrale fc (Hz) | Largeur de bande (Hz) |
|---|---|---|
| $B_1$ | 60 | 80 |
| $B_2$ | 150 | 100 |
| $B_3$ | 250 | 100 |
| $B_4$ | 350 | 100 |
| $B_5$ | 455 | 110 |
| $B_6$ | 570 | 120 |
| $B_7$ | 700 | 140 |
| $B_8$ | 845 | 150 |
| $B_9$ | 1 000 | 160 |
| $B_{10}$ | 1 175 | 190 |
| $B_{11}$ | 1 375 | 210 |
| $B_{12}$ | 1 600 | 240 |
| $B_{13}$ | 1 860 | 280 |
| $B_{14}$ | 2 160 | 320 |
| $B_{15}$ | 2 510 | 380 |
| $B_{16}$ | 2 925 | 450 |
| $B_{17}$ | 3 425 | 550 |
| $B_{18}$ | 4 050 | 700 |
| $B_{19}$ | 4 850 | 900 |
| $B_{20}$ | 5 850 | 1 100 |
| $B_{21}$ | 7 050 | 1 300 |
| $B_{22}$ | 8 600 | 1 800 |
| $B_{23}$ | 10 750 | 2 500 |
| $B_{24}$ | 13 750 | 3 500 |

On remarquera que les bandes critiques ont des largeurs variables, la moins large étant la première bande critique $B_1$, qui couvre les fréquences les plus graves, et la plus large étant la vingt-quatrième bande critique $B_{24}$ qui couvre les fréquences les plus aigües.

Pour chaque bande critique, la norme ISO/IEC 11172-3 définit un niveau de masque de bande critique Nm(i). Il s'agit d'une approximation du niveau de la courbe de niveau de masque sur l'ensemble de la bande critique (le niveau réel de la courbe de niveau de masque pour un signal donné pouvant varier dans une même bande critique). Le niveau de masque Nm(i) est défini en fonction des niveaux de masques des huit bandes critiques inférieures (Nm(i-8) à Nm(i-1)), si elles existent, et des trois bandes supérieures (Nm(i+1) à Nm(i+3)), si elles existent.

On a Nm(i) = ΣNm(j), avec

j indice entier positif tel que j ∈ [i-8,..., i-1, i+1,...,i+3],

$$Nm(j) = 10^{[Xnm(j) - Av(j) - Vf(j)]/20},$$

$$Xnm(j) = 20 \log_{10} (Av(j)) + 5.69 \text{ dB}$$

(pression acoustique),

$$Av(j) = 6.025 + 0.275 * z(j)$$

pour les raies tonales,

$$Av(j) = 2.025 + 0.175 * z(j)$$

pour les raies non tonales, avec $Av(j)$ l'index de masquage de la $j^{ième}$ bande critique j et $z(j)$ le taux de la $j^{ième}$ bande critique,

$$Vf(j) = (i-j-1) * (17 - 0.15 * Xnm(j)) + 17,$$

pour j de i-8 à i-1, et

$$Vf(i+1) = 0.4 * Xnm(i+18) + 6,$$

$$Vf(i+2) = 17 * Xnm(i+2) + 6,$$

$$Vf(i+3) = 34 * Xnm(i+3) + 6.$$

$z(j)$ est une constante définie pour chaque bande critique et on a $z(1) = 0.62$ dB, $z(2) = 1.8$ dB, $z(3) = 2.4$ dB, $z(4) = 3.6$ dB, $z(5) = 4.7$ dB, $z(6) = 5.8$ dB, $z(7) = 6.7$ dB, $z(8) = 7.7$ dB, $z(9) = 8.9$ dB, $z(10) = 10.0$ dB, $z(11) = 10.9$ dB, $z(12) = 12.0$ dB, $z(13) = 13.1$ dB, $z(14) = 14.0$ dB, $z(15) = 14.9$ dB, $z(16) = 15.8$ dB, $z(17) = 16.7$ dB, $z(18) = 17.7$ dB, $z(19) = 18.8$ dB, $z(20) = 19.8$ dB, $z(21) = 20.9$ dB, $z(22) = 22.2$ dB, $z(23) = 23.2$ dB, et $z(24) = 23.9$ dB.

En général, les bandes critiques les plus masquées sont les bandes aigües du spectre audiofréquence, qui sont masquées par les bandes graves, statistiquement plus énergétiques.

Après ce bref aperçu du phénomène de masquage auditif et de sa modélisation, on va maintenant décrire un exemple de mise en oeuvre de l'invention consistant à transmettre des données dans la bande passante d'un signal audiofréquentiel diffusé.

Les données pourront être aussi bien analogiques (des motifs musicaux par exemple) que numériques (c'est à dire des données binaires) . Les données pourront concerner les signaux audiofréquentiels diffusés (par exemple le nom d'une station de radio ou les références de titres musicaux émis par cette station) et avoir vocation à être perçues par l'auditeur, par exemple par le biais d'un affichage à cristaux liquides. Ce pourra aussi être des données de service intéressant le diffuseur des signaux ou des instances de régulation, et être imperceptibles par l'auditeur.

Dans la suite de la description donnée à titre d'exemple, on supposera que les données sont des données binaires. Ces données seront relatives par exemple aux programmes diffusés par une station de radio.

Une station de radio émet généralement en direction de ces auditeurs des signaux audiofréquentiels modulés par des techniques classiques de modulation d'amplitude ou de fréquence. Les signaux audiofréquentiels pourront être une chanson, un générique musical, la voie d'un animateur etc.

L'invention propose de calculer à partir du signal audiofréquentiel à émettre, pour une ou plusieurs des bandes critiques $B_i$ du spectre audiofréquentiel, le ou les niveaux de masque de cette ou ces bandes critiques. Si pour une bande critique le niveau de masque est supérieur au niveau du signal audiofréquentiel, on peut éliminer, sans différence perceptible par l'auditeur, la partie correspondante du signal audiofréquentiel. L'invention propose d'insérer les données (on parlera de signaux audiofréquentiels de données), de manière inaudible pour l'auditeur, dans cette bande critique, ou une partie de cette partie de bande critique, à la place du signal audiofréquentiel originel (pour autant, bien entendu, que le niveau du signal audiofréquentiel de données est inférieur au niveau de masque de la bande critique). En réception du signal transmis, il suffit de filtrer le signal reçu en fonction des bandes critiques pour séparer le signal audiofréquentiel de données et traiter les données transmises.

On remarquera que le débit d'informations transmises ne pourra pas être en pratique fixe, le signal originel (et donc les niveaux de masque de bande critique $Nm(i)$ correspondants) étant à priori variables dans le temps, que ce soit en fréquence ou en amplitude.

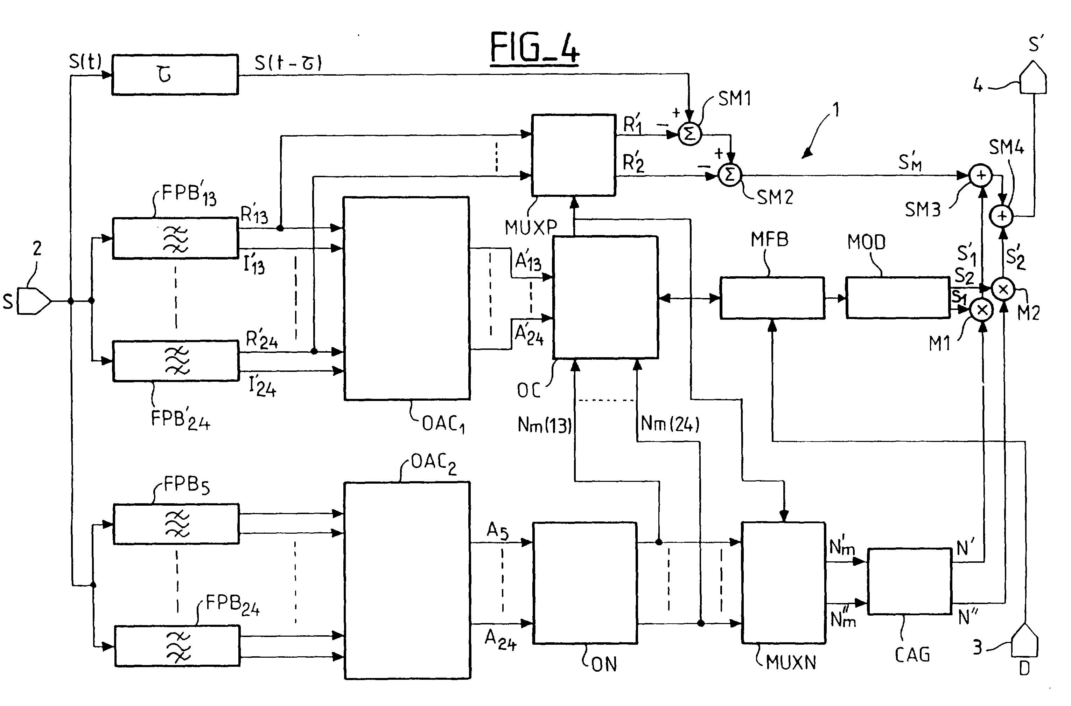

Un système de transmission de données selon l'invention comprendra principalement un dispositif d'insertion de données (dont un exemple est illustré figure 4) et un dispositif de réception de données (dont un exemple est illustré figure 3). Typiquement, le dispositif d'insertion de données pourra être mis en oeuvre soit au stade d'une régie finale de diffusion sonore ou visuelle, soit au stade de la production des signaux audiofréquentiels. Le dispositif de réception de données comprendra par exemple un dispositif d'affichage des données reçues (si les données sont destinées à l'auditeur) et/ou un dispositif de mémorisation (si les données sont dédiées par exemple à un contrôle d'audiométrie en temps différé). Le dispositif de réception pourra aussi comprendre un dispositif de réémission des informations, par exemple vers un boîtier de jeu dans le cadre des programmes de télévision interactifs. Le signal audiofréquentiel de données pourra être recueilli, au niveau du dispositif de réception, soit acoustiquement par un simple microphone (disposé à proximité du haut parleur du récepteur de radio), soit électriquement à l'aide d'un connecteur approprié (tel qu'une sortie d'enregistrement audio).

En référence à la figure 4, on va décrire à titre d'exemple un dispositif 1 d'insertion de données, ces informations étant dans le cas présent des données binaires.

Pour transmettre les données dans le signal audiofréquentiel d'un programme de radio ou de télévision, on remplace dans certaines bandes de fréquences de ce signal, le signal par une modulation numérique. Cette transmission se fait de préférence à un niveau inférieur aux niveaux de masques de ces bandes de fréquence, de manière à assurer le caractère inaudible des informations transmises. Par ailleurs, cette transmission se fait de préférence lorsque ces niveaux de masques sont suffisamment élevés pour assurer un rapport signal/bruit satisfaisant par rapport au canal de diffusion.

Dans un exemple, les données à émettre peuvent être organisées en trames constituées d'un mot de début et d'un nombre défini de mots de données. On pourra aussi choisir une trame comprenant un mot de début, un nombre variable de mots de données, et un mot de fin.

Le dispositif 1 d'insertion de données illustré sur la figure 4 comprend une entrée 2 pour recevoir le signal audiofréquentiel S originel à émettre (chanson, voie d'un animateur, etc.), une entrée 3 pour recevoir les données D à émettre, et une sortie 4 pour fournir un signal de sortie audiofréquentiel S' produit à partir du signal audiofréquentiel S d'origine et des données D.

Le signal audiofréquentiel S est filtré dans un banc de douze filtres passe-bande $FPB'_{13}$ à $FPB'_{24}$, de préférence complexes, recevant le signal audiofréquentiel S en entrée. Le traitement analytique du signal S facilite le calcul d'amplitudes. Chaque filtre complexe produit en sortie la partie réelle ($R'_{13}$ à $R'_{24}$) et la partie imaginaire ($I'_{13}$ à $I'_{24}$) du signal audiofréquentiel S, dans la bande de fréquence (notées $F'_{13}$ à $F'_{24}$) qu'il laisse passer. Comme on le verra, le banc de filtres passe-bande complexes $FPB'_{13}$ à $FPB'_{24}$ permet d'éliminer les composantes du signal audiofréquentiel S dans les bandes de fréquence $F'_{13}$ à $F'_{24}$, pour y insérer les données. Ces bandes de fréquence ($F'_{13}$ à $F'_{24}$) sont des bandes comprises dans les bandes critiques $B_{13}$ à $B_{24}$. Un organe de calcul d'amplitude OAC1 calcule les amplitudes $A'_j$ (j indice entier de 13 à 24) à partir des signaux $R'_j$ et $I'_j$ fournis par les filtres $FPB'_{13}$ à $FPB'_{24}$.

Le signal audiofréquentiel S est également filtré dans un banc de vingt filtres passe-bande $FPB_5$ à $FPB_{24}$, de préférence complexes, recevant le signal audiofréquentiel S en entrée. Chaque filtre complexe produit en sortie la partie réelle ($R_5$ à $R_{24}$) et la partie imaginaire ($I_{13}$ à $I_{24}$) du signal audiofréquentiel S, dans la bande de fréquence qu'il laisse passer. Le banc de filtres passe-bande complexes $FPB_5$ à $FPB_{24}$ permet de calculer les niveaux de masque des bandes critiques $B_{13}$ à $B_{24}$. Ce calcul est réalisé à partir d'un organe de calcul d'amplitude OAC2 calculant les amplitudes $A_i$ (i indice entier de 5 à 24) à partir des signaux $R_i$ et $I_i$ fournis par les filtres $FPB_5$ à $FPB_{24}$. Ces amplitudes sont fournis à un processeur de calcul ON réalisant le calcul des niveaux de masque Nm(13) à Nm(24).

Les amplitudes $A'_{13}$ à $A'_{24}$, et les niveaux de masque Nm(13) à Nm(24) sont fournis à un organe de commande OC qui va les comparer deux à deux afin de déterminer si il existe deux amplitudes $A'_{j1}$ et $A'_{j2}$ inférieures aux niveaux de masque Nm(j1) et Nm(j2) correspondants (j1 et j2 étant deux indices entiers différents compris entre 13 et 24). Si c'est le cas, il existe aux moins deux bandes de fréquence $F'_{j1}$ et $F'_{j2}$ dans le spectre audiofréquence pour lesquelles le signal S est inaudible. On peut alors filtrer le signal S afin d'éliminer ces composantes spectrales dans ces deux bandes de fréquence $F'_{j1}$ et $F'_{j2}$.

Pour ce faire, on soustrait les composantes réelles, notées $R'_1$ et $R'_2$, du signal S dans ces deux bandes de fréquence $F'_{j1}$ et $F'_{j2}$, du signal S d'origine. Ces deux composantes $R'_1$ et $R'_2$ sont fournies par le biais d'un dispositif de multiplexage MUXP recevant les composantes $R'_{13}$ à $R'_{24}$, chacune de ces composantes étant pondérée de telle sorte qu'on les annule toutes sauf deux d'entre elles ($R'_{j1}$ et $R'_{j2}$). La commande de ce dispositif MUXP est faite par l'organe de commande OC. Ces composantes (on a par exemple $R'_1 = R'_{j1}$ et $R'_2 = R'_{j2}$) sont ensuite soustraites du signal S (celui ci ayant été retardé pour tenir compte du délai de traversée des filtres et du dispositif de multiplexage) dans deux sommateurs SM1 et SM2, de telle sorte qu'on produit un signal audiofréquentiel $S'_M = S - R'_1 - R'_2$. Ce signal audiofréquentiel $S'_M$ est subjectivement identique, pour un auditeur qui le percevrait, au signal S.

L'ensemble formé par les filtres passe-bande $F'_{13}$ à $F'_{24}$, le dispositif de multiplexage MUXP et les sommateurs SM1 et SM2 se comporte comme un filtre coupe-bande adaptatif vis à vis du signal S.

Les bandes de fréquence $F'_{j1}$ et $F'_{j2}$ étant libérées pour permettre l'insertion des données D, on va maintenant s'intéresser à cette insertion.

Classiquement, on va tout d'abord procéder à une mise en forme des données binaires D. On notera que la réalisation de cette mise en forme est indépendante en tout état de cause de la libération de bandes de fréquence $F'_j$ dans le signal audiofréquentiel S. Les données D à transmettre sont mises en forme dans un dispositif MFB afin de les émettre sous la forme de trame désirée (c'est à dire en insérant des mots de début et éventuellement de fin, des codes redondants etc.). Puis, on va produire deux signaux audiofréquentiels de données $S_1$ et $S_2$ par le biais d'un modulateur MOD. La modulation numérique utilisée sera par exemple une modulation QPSK (Quadrature Phase Shift Keying), les données mises en forme, codées en NRZ (Non Retour à Zéro) modulant en phase deux porteuses de fréquences comprises dans les bandes $F'_{j1}$ et $F'_{j2}$, de préférence correspondant aux fréquences centrales des bandes $F'_{j1}$ et $F'_{j2}$ utilisées (ce qui permet d'utiliser toute la largeur de ces bandes pour émettre les signaux audiofréquentiels de données $S_1$ et $S_2$). Cette étape de modulation nécessite bien entendu la connaissance, via l'organe de commande OC, des bandes de fréquence libérées dans le spectre du signal S.

Parallèlement à la libération des bandes $F'_{j1}$ et $F'_{j2}$, les niveaux de masque Nm(13) à Nm(24) sont fournis par l'organe ON à un dispositif de multiplexage MUXN qui va produire en sortie deux niveaux N'm = Nm(j1) et N''m = Nm (j2). Afin de tenir compte de la modulation choisie pour produire les signaux $S_1$ et $S_2$, on produit deux coefficients N' et N'', à partir des coefficients N'm et N''m, à l'aide d'un dispositif de contrôle de gain CAG. A l'aide de deux multiplieurs M1 et M2, on produit ensuite deux signaux audiofréquentiels de données $S'_1 = N' * S_1$ et $S'_2 = N'' * S_2$. En sommant, dans deux additionneurs SM3 et SM4, les signaux $S'_1$, $S'_2$ et $S'_M$, on produit un signal $S' = S - (R'_1 + R'_2) + (S'_1 + S'_2)$. Le signal S' produit comprend à la fois les composantes audiofréquentielles audibles du signal audiofréquentiel S d'origine et les données D (représentées par $S'_1$ et $S'_2$) qui sont inaudibles.

Une fois le signal S' produit, on va classiquement le moduler selon des techniques connues avant de l'émettre en direction des récepteurs des auditeurs.

On notera que le gain appliqué aux signaux $S_1$ et $S_2$ étant uniquement proportionnel aux niveaux de masque des j1-ième et j2-ième bandes $F'_{j1}$ et $F'_{j2}$, le niveau en amplitude des signaux $S'_1$ et $S'_2$ pourra être supérieur aux niveaux d'amplitude des composantes du signal S qui ont été enlevées.

De préférence, les bandes $F'_{13}$ à $F'_{24}$ ont une même largeur pour assurer un débit de données transmises qui soit fixe, quelles que soient les bandes $F'_{13}$ à $F'_{24}$ utilisées pour les transmettre. On peut ainsi utiliser un même type de modulation, quelles que soient les bandes libérées dans le signal S. Dans l'exemple illustré, on prévoit la possibilité de transmettre les données dans les douze dernières bandes critiques, de la bande critique $B_{13}$ (fc = 1860 Hz) à la bande critique $B_{24}$ (fc = 13 750 Hz). Comme on l'a vu, ces informations sont transmises dans deux bandes situées chacune dans une des douze bandes critiques. Bien entendu, plus le nombre de bandes $F'_j$ utilisées simultanément est important, plus le débit de données transmises sera élevé. On pourra donc réaliser un dispositif d'insertion de données utilisant toutes les bandes $F'_j$ libérables. Néanmoins, on remarquera que l'utilisation simultanée d'un nombre réduit de bandes $F'_j$ permet de diminuer la probabilité de distorsion du signal audiofréquentiel d'origine si celui-ci varie fortement d'un instant à l'autre (quoique cette probabilité soit faible compte tenu du masquage temporel de l'oreille humaine).

Quelles que soient la ou les bandes critiques dans lesquelles on insère les données, on comprendra aisément que la ou les bandes $F'_j$ utilisées à l'intérieur de ces bandes critiques ont une largeur inférieure ou égale aux largeurs des bandes critiques correspondantes.

Dans l'exemple illustré, le premier banc de filtres passe-bande est constitué de préférence de filtres passe-bande $F'_{13}$ à $F'_{24}$ de largeurs égale à 280 Hz à -3 décibels. Cette largeur correspond à la largeur de la bande critique utilisable pour insérer les données qui a la largeur la plus faible, c'est à dire à la largeur de la treizième bande critique (bien entendu, on suppose ici que les fréquences porteuses utilisées pour produire les signaux audiofréquentiels de données sont égales aux fréquences centrales des bandes critiques). On a donc peu intérêt à mettre en oeuvre une transmission des données dans les bandes critiques inférieures, celles-ci ayant une largeur plus faible, ce qui limiterait le débit maximal admissible.

Le banc de filtres $F'_{13}$ à $F'_{24}$ est réalisé de préférence par filtrage multicadence, ce qui permet d'avoir un temps de propagation constant et un nombre d'opérations limitées.

Le second banc de filtres $F_5$ à $F_{24}$ est de préférence obtenu à partir de filtres passe-bande reconstructibles (c'est à dire de filtres tels que la somme des signaux filtrés en sortie est identique au signal d'entrée avant filtrage) dont les gabarits correspondent aux bandes critiques. Autrement dit, on a intérêt à calculer le plus justement possible les niveaux de masque des bandes critiques, ce qui permet d'éviter de produire des signaux audiofréquentiels de données qui pourraient être audibles.

Les informations binaires sont par exemple regroupées par mots de trente-deux bits. Une trame transmise comportera par exemple un mot de début, codé sur trente-deux bits et un mot de données de trente-deux bits. Le mot de début est par exemple composé de neuf premiers bits constituant une rampe d'accrochage utilisée dans le dispositif de réception, les vingt-trois bits suivants formant un mot de synchronisation. Le mot de données est par exemple composé de trois octets représentant les données et d'un dernier octet de redondance pour la mise en oeuvre d'un code correcteur d'erreur si un tel code est utilisé. Cette organisation des trames d'informations correspond à une transmission des informations sur des blocs temporels du signal audiofréquentiel d'une durée de 256 millisecondes, ce qui correspond à la durée nécessaire pour transmettre soixante-quatre bits, c'est à dire deux trames de données. On peut ainsi atteindre un débit binaire maximal de 500 bits par seconde.

De préférence, on émet les trames de données à la condition que les niveaux de masque des bandes critiques utilisées pour insérer les données soient supérieures au niveau d'énergie minimale permettant de résister aux perturbations apportées par le canal.

Bien qu'on ne l'ait pas précisé, il est bien entendu préférable de ne pas libérer de bandes de fréquence dans le signal audiofréquentiel d'origine quand on n'a pas de données à transmettre. Pour cela il suffit d'annuler les signaux produits en sortie du dispositif de multiplexage MUXP. Ainsi, même si le niveau de masque du signal d'origine varie rapidement et de manière importante, il n'y aura pas de risque de perturbation du signal d'origine par suppression de fréquences audibles. Une fois la transmission de données réalisée, on procédera de préférence à une annulation progressive des signaux de sortie du dispositif de multiplexage MUXP afin de diminuer la probabilité de rendre le "rebouchage" audible.

Si le niveau de masque du signal audiofréquentiel d'origine chute et qu'on a émis le mot de début, on continuera de préférence à émettre afin de faciliter le traitement des données au niveau du dispositif de réception. Si les données sont codées sur trente deux bits c'est peu gênant du fait du masquage auditif temporel.

Le dispositif 5 d'extraction de données illustré sur la figure 3 comprend une entrée 6 pour recevoir le signal audiofréquentiel S'.

Le signal audiofréquentiel S' est filtré dans un banc de douze filtres passe-bande $FPB''_{13}$ à $FPB''_{24}$, ayant des gabarits identiques aux douze filtres $FPB'_{13}$ à $FPB'_{24}$. On produit ainsi douze signaux audiofréquentiels $S'_{13}$ à $S'_{24}$, correspondants aux composantes spectrales du signal S' dans les bandes $F'_{13}$ à $F'_{24}$ dans lesquelles sont susceptibles de se trouver des données insérées par un dispositif analogue à celui décrit en référence à la figure 4.

Le dispositif 5 comporte un banc de douze démodulateurs $DEMOD_{13}$ à $DEMOD_{24}$, chaque démodulateur étant associé à l'un des filtre passe-bande. Une fois les signaux démodulés, on les échantillonne dans des échantillonneurs $EC_{13}$ à $EC_{24}$ associés à des dispositifs de récupération d'horloge $RC_{13}$ à $RC_{24}$, afin de produire des données binaires.

Une fois les signaux audiofréquentiels échantillonnés, les données binaires produites sont traitées dans des organes de reconnaissance $RTB_{13}$ à $RTB_{24}$ afin de déterminer si ces données sont représentatives de données transmises (auquel cas des bits de synchronisation de mots de début seront présents) ou si ces données ne correspondent à rien (la probabilité étant assez faible qu'on puisse produire par échantillonnage, à partir d'un signal audiofréquentiel quelconque, des bits correspondants aux bits de synchronisation d'un mot de début).

Bien entendu, si les données émises ne sont pas des données numériques mais des données analogiques, telles qu'un motif musical par exemple, on adaptera les dispositifs d'insertion et d'extraction de données en conséquence. En particulier, il ne sera pas nécessaire d'utiliser des dispositifs de modulation, de démodulation et d'échantillonnage. Ceux-ci seront remplacés par des moyens de transposition en fréquence des données à insérer pour adapter les fréquences des données aux fréquences libérées dans le dispositif d'insertion.

## Revendications

1. Système de diffusion de données (D), ces informations étant transmises dans la bande passante d'un signal audiofréquentiel (S) diffusé,
   caractérisé en ce qu'il comprend :

   - des moyens de détermination dans au moins une bande de fréquence ($F'_{13}$,..., $F'_{24}$) de l'amplitude ($A'_{13}$,..., $A'_{24}$) du signal audiofréquentiel (S) et de comparaison de cette amplitude avec un niveau de masque auditif ($Nm(13)$,...,$Nm(24)$) associé à cette bande de fréquence,
   - des moyens d'élimination des composantes fréquentielles du signal audiofréquentiel dans la dite bande de fréquence si l'amplitude du signal est inférieur au niveau de masque auditif de la dite bande, et
   - des moyens d'insertion des dites données dans cette bande de fréquence à un niveau inférieur ou égal au niveau de masque auditif de la dite bande de fréquence.

2. Système selon la revendication 1, caractérisé en ce que la bande de fréquence ($F'_{13}$,..., $F'_{24}$) est comprise dans une bande de référence ($B_{13}$,..., $B_{24}$).

3. Système selon la revendication 2, caractérisé en ce que la bande de fréquence a une fréquence centrale identique à la fréquence centrale de la bande de référence.

4. Système selon la revendication 1, caractérisé en ce qu'il comprend des moyens d'insertion des données dans au moins deux bandes de fréquence ($F'_{j1}$, $F'_{j2}$) distinctes.

**5.** Système selon la revendication 4, caractérisé en ce que les bandes de fréquence distincte sont comprises dans des bandes de référence ($B_{j1}$, $B_{j2}$) de largeurs distinctes.

**6.** Système selon la revendication 5, caractérisé en ce que les bandes de fréquence distinctes ont une fréquence centrale identique à la fréquence centrale de la bande de référence dans laquelle elles sont comprises.

**7.** Système selon l'une des revendications 5 à 6, caractérisé en ce que les bandes de fréquence distinctes ont la même largeur.

**8.** Système selon la revendication 7, caractérisé en ce que la largeur des bandes de fréquence distinctes est égale à la largeur de la bande de référence dans lesquelles elles sont comprises ayant la largeur la plus faible.

**Patentansprüche**

**1.** System zur Übertragung von Daten (D), wobei diese Informationen im Durchlaßbereich eines ausgestrahlten Audiofrequenzsignals (S) übertragen werden,
dadurch gekennzeichnet, daß es umfaßt:

- Mittel zum Feststellen der Amplitude ($A'_{13}$, ..., $A'_{24}$) des Audiofrequenzsignals (S) in wenigstens einem Frequenzbereich ($F'_{13}$, ... $F'_{24}$) und zum Vergleich dieser Amplitude mit einem Audiomaskenpegel (Nm(13), ..., Nm(24)), der zu diesem Frequenzbereich gehört,
- Mittel zum Eliminieren von Frequenzkomponenten des Audiofrequenzsignals in dem Frequenzbereich, wenn die Amplitude des Signals kleiner als der Audiomaskenpegel des Bereiches ist, und
- Mittel zum Einfügen von Daten in diesem Frequenzbereich mit einem kleineren oder gleichen Pegel wie der Audiomaskenpegel des Frequenzbereichs.

**2.** System nach Anspruch 1,
dadurch gekennzeichnet, daß
der Frequenzbereich ($F'_{13}$, ..., $F'_{24}$) in einem Referenzbereich ($B_{13}$,..., $B_{24}$) enthalten ist.

**3.** System nach Anspruch 2,
dadurch gekennzeichnet, daß
der Frequenzbereich eine Zentralfrequenz hat, die identisch mit der Zentralfrequenz des Referenzbereiches ist.

**4.** System nach Anspruch 1,
dadurch gekennzeichnet, daß
es Mittel zum Einfügen von Daten in wenigstens zwei unterschiedlichen Frequenzbereichen ($F'_{j1}$, $F'_{j2}$) umfaßt.

**5.** System nach Anspruch 4,
dadurch gekennzeichnet, daß
die unterschiedlichen Frequenzbereiche in Referenzbereichen ($B_{j1}$, $B_{j2}$) unterschiedlicher Breiten enthalten sind.

**6.** System nach Anspruch 5,
dadurch gekennzeichnet, daß
die unterschiedlichen Frequenzbereiche eine Zentralfrequenz haben, die identisch mit der Zentralfrequenz des Referenzbereiches ist, in welchem sie enthalten sind.

**7.** System nach einem der Ansprüche 5 oder 6,
dadurch gekennzeichnet, daß
die unterschiedlichen Frequenzbereiche die gleiche Breite haben.

**8.** System nach Anspruch 7,
dadurch gekennzeichnet, daß
die Breite der unterschiedlichen Frequenzbereiche gleich der Breite des Referenzbereichs ist, in welchen sie enthalten sind, das eine kleinstmögliche Breite hat.

**Claims**

1. System for broadcasting data (D), this information being transmitted in the passband of a broadcast audio-frequency signal (S),

   characterised in that it includes:

   - means for determining in at least one frequency band ($F'_{13},...,F'_{24}$) the amplitude ($A'_{13},...,A'_{24}$) of the audio-frequency signal (S) and for comparing this amplitude with an auditory masking level ($Nm(13),...,Nm(24)$) associated with this frequency band,
   - means for eliminating the frequency components of the audio-frequency signal in the said frequency band if the amplitude of the signal is lower than the auditory masking level of the said band, and
   - means for inserting the said data into this frequency band at a level lower than or equal to the auditory masking level of the said frequency band.

2. System in accordance with claim 1, characterised in that the frequency band ($F'_{13},...,F'_{24}$) is within a frequency band ($B_{13},...,B_{24}$).

3. System in accordance with claim 2, characterised in that the frequency band has a central frequency same as the central frequency of the reference band.

4. System in accordance with claim 1, characterised in that it includes means for inserting the data in at least two separate frequency bands ($F'_{j1}, F'_{j2}$).

5. System in accordance with claim 4, characterised in that the separate frequency bands are included within the reference bands ($B_{j1}, B_{j2}$) of separate widths.

6. System in accordance with claim 5, characterised in that the separate frequency bands have a central frequency same as the central frequency of the reference band in which they are included.

7. System in accordance with one of the claims 5 and 6, characterised in that the separate frequency bands have same width.

8. System in accordance with claim 7, characterised in that the width of the separate frequency bands is equal to the width of the reference band in which they are included having the lowest width.

FIG_1

FIG_2

FIG_3

FIG_4